# FASCICULE DE BREVET EUROPEEN

(11) **EP 1 521 731 B1**
(45) Date de publication et mention de la délivrance du brevet: **11.04.2007**
(21) Numéro de dépôt: 03748209.8
(22) Date de dépôt: 11.07.2003
(51) Int. Cl.: C04B 35/80, C04B 35/83

(54) **PROCEDE ET INSTALLATION POUR L'OBTENTION DE PRODUITS EN CARBONE A PARTIR DE PRODUITS EN PRECURSEUR DE CARBONE**
VERFAHREN UND VORRICHTUNG ZUR HERSTELLUNG VON KOHLENSTOFFPRODUKTEN AUS KOHLENSTOFFVORLÄUFERPRODUKTEN
METHOD AND INSTALLATION FOR OBTAINING CARBON PRODUCTS FROM CARBON PRECURSOR PRODUCTS

(30) Priorité: 12.07.2002 FR 0208821
(43) Date de publication de la demande: 13.04.2005
(73) Titulaire: Snecma Propulsion Solide, 33187 Le Haillan Cedex (FR)
(72) Inventeur: Loncle, Jean-Etienne, F-33185 Le Haillan (FR); Pothier, Pascal, F-33290 Le Pian Medoc (FR)
(74) Mandataire: Joly, Jean-Jacques
(86) Numéro de dépôt international: PCT/FR2003/002205
(87) Numéro de publication internationale: WO 2004/007402

(56) Documents cités:
- GB-A- 2 148 866
- US-A- 5 614 134

## Description

### Arrière-plan de l'invention

L'invention concerne la réalisation de produits en carbone à partir de produits en un matériau précurseur de carbone.

Un domaine particulier d'application de l'invention est la réalisation de textures ou préformes en fibres de carbone destinées notamment à constituer des renforts fibreux pour des pièces en matériau composite thermostructural tel que composite carbone/carbone (C/C) ou composite à matrice céramique et renfort carbone. De telles préformes fibreuses en fibres de carbone sont habituellement obtenues à partir de textures en fibres de précurseur de carbone qui sont plus aptes à subir les opérations textiles requises pour la mise en forme de ces textures.

Parmi les précurseurs de carbone, en particulier les précurseurs sous forme de fibres, le polyacrylonitrile (PAN) préoxydé est couramment utilisé. Au moins pour certaines utilisations, il est nécessaire non seulement de transformer en carbone des textures fibreuses en PAN préoxydé, mais aussi d'en éliminer les métaux ou impuretés métalliques provenant du précurseur, principalement le sodium. C'est pourquoi la réalisation de produits en carbone à partir de précurseur en PAN préoxydé comprend habituellement deux étapes successives :
- une première étape de carbonisation proprement dite par transformation chimique du précurseur en carbone, celle-ci étant réalisée à l'échelle industrielle dans un four en élevant progressivement la température de chauffage du four jusqu'à environ 900°C, et
- une deuxième étape de traitement thermique à haute température, celle-ci étant également réalisée dans un four, en élevant la température progressivement jusqu'au delà de 1000°C, habituellement entre 1400°C et 1650°C, de manière à éliminer le sodium par sublimation, et même à très haute température, jusqu'à 2000°C ou 2200°C, voire 2500°C, de manière à conférer des propriétés particulières aux fibres de carbone et à éliminer d'éventuelles autres impuretés métalliques.

Au cours de la première étape, réalisée habituellement sensiblement à pression atmosphérique et sous balayage de gaz inerte, tel l'azote, la transformation du précurseur est achevée pour parvenir à un taux de carbone supérieur à 95 % et pouvant atteindre 99 % ou plus. La perte de masse est importante, de l'ordre de 50 %, et s'accompagne de la production d'un volume important d'effluent gazeux, contenant notamment des nitriles, en particulier des cyanures, qui doivent être traités.

La deuxième étape est réalisée sous pression réduite, également sous balayage de gaz inerte tel qu'azote ou argon. Les débits de gaz de balayage et d'effluent gazeux sont bien moindres que lors de la première étape.

Les deux étapes sont mises en oeuvre dans des installations différentes adaptées. Au stade industriel, elles durent chacune plusieurs jours. Le processus d'obtention de produits en carbone sans sodium à partir de précurseur PAN préoxydé est donc long et coûteux.

Les mêmes problèmes sont rencontrés avec des fibres en précurseur autres que PAN préoxydé contenant également du sodium ou d'autres métaux tels que magnésium ou calcium à éliminer, et lorsque doivent être éliminés des métaux ou impuretés métalliques tels que fer, nickel ou chrome, par exemple, qui requièrent un traitement thermique à température élevée, typiquement jusqu'à 2000°C et plus pour être éliminés par sublimation.

### Objet et résumé de l'invention

L'invention a pour but de proposer un procédé et une installation permettant d'obtenir des produits en carbone, avec une économie de coût et de durée de traitement très importante.

Ce but est atteint grâce à un procédé du type comportant :
- une première étape de transformation du matériau précurseur en carbone par chauffage, avec extraction continue d'effluent gazeux produit, et
- une deuxième étape de traitement thermique à haute température sous pression réduite avec extraction continue d'effluent gazeux produit, procédé dans lequel, conformément à l'invention,
   la première et la deuxième étape sont réalisées de façon enchaînée dans un même four en procédant, après la fin de la première étape, à :
   - une commutation de la sortie d'effluent gazeux du four pour interrompre une liaison avec un premier dispositif d'extraction utilisé lors de la première étape et établir une liaison avec un deuxième dispositif d'extraction utilisé lors de la deuxième étape,
   - un ajustement de la pression interne du four à la valeur de pression réduite requise pour la deuxième étape, et
   - un ajustement de la température de chauffage du four à partir de la valeur atteinte à la fin de la première étape.

Selon une particularité du procédé, après la fin de la première étape, on réalise une commutation de la mesure de température de chauffage du four d'au moins un premier capteur de température à au moins un deuxième capteur différent du premier. Le ou chaque premier capteur peut être un capteur du type à thermocouple qui est logé dans le four à proximité d'une paroi de celui-ci, et qui est sacrifié sous l'effet de la chaleur lors de la deuxième étape. L'utilisation, lors de la première étape, d'un capteur de température du type à thermocouple peut en effet être rendue nécessaire du fait du dégagement d'effluent gazeux important empêchant le recours à un capteur tel que pyromètre à visée optique utilisable lors de la deuxième étape.

Cette commutation d'un moyen de mesure de température à un autre peut aussi s'accompagner d'un changement de la configuration de zones de chauffage à l'intérieur du four.

Avantageusement, la commutation entre le premier et le deuxième dispositif d'extraction d'effluents gazeux, ainsi qu'entre premier(s) et deuxième(s) capteurs de mesure est automatisée.

La deuxième étape étant réalisée sous pression réduite, il est utile de réaliser un test d'étanchéité du four pour éviter une pénétration d'air due à une fuite et pouvant provoquer une corrosion par oxydation du produit en carbone pendant la deuxième étape du procédé. Selon une autre particularité du procédé, on effectue un test d'étanchéité du four avant la première étape. Le test d'étanchéité peut comprendre notamment un balayage du volume interne du four par un gaz inerte tel que de l'azote et la mesure de la quantité d'oxygène gazeux contenu dans le gaz de balayage du four, après chargement du four.

Lors de la première étape, le chauffage est réalisé pour atteindre une température suffisante pour réaliser une carbonisation achevée ou quasi-achevée du précurseur, mais inférieure au seuil de sublimation d'un ou plusieurs métaux ou impuretés métalliques contenus dans le précurseur, et même inférieure au seuil de destruction des capteurs de température logés dans le four. Cette température est de préférence comprise entre 750°C et 1100°C, typiquement voisine de 900°C.

Lors de la deuxième étape, le chauffage est réalisé à une température suffisante pour sublimer un ou plusieurs métaux ou impuretés métalliques à éliminer et/ou pour éventuellement conférer des propriétés particulières aux produits en carbone obtenus. Dans le cas de sodium à éliminer, cette température est supérieure à 1000°C, généralement comprise entre 1400°C et 1650°C typiquement voisine de 1600°C. Dans le cas d'autres métaux tels que fer, nickel ou chrome à éliminer, cette température peut atteindre 2000°C ou 2200°C, voire 2500°C. La température maximale peut être limitée en-deçà d'un seuil à partir duquel le produit en carbone obtenu subit une transformation susceptible d'affecter ses propriétés, par exemple une altération de propriétés mécaniques et thermiques dans le cas de fibres ou, au contraire, peut être choisie supérieure à ce seuil afin de modifier ces propriétés. La deuxième étape est réalisée sous pression réduite, avantageusement inférieure à 50 kPa, par exemple comprise entre 0,1 kPa et 50 kPa, et de préférence inférieure à 5 kPa.

Selon une autre particularité du procédé, lorsque l'effluent gazeux extrait du four lors de la deuxième étape contient au moins un métal alcalin, par exemple Na, on réalise une neutralisation de cet alcalin par injection d'un agent de neutralisation dans une canalisation d'évacuation d'effluents. Cette neutralisation peut être effectuée par passivation par injection de dioxyde de carbone (CO₂) dans l'effluent gazeux, par hydratation par injection de vapeur d'eau, (H₂O), ou encore par injection d'un mélange CO₂ + H₂O.

Avantageusement, cette neutralisation est réalisée en continu par injection de l'agent de neutralisation dans le courant d'effluent/gazeux parcourant la canalisation d'évacuation.

Le procédé conforme à l'invention est particulièrement avantageux du fait de la réduction de durée de traitement et donc de coût qu'il permet en comparaison avec le procédé de l'art antérieur réalisé en deux étapes séparées dans deux fours, avec refroidissement intermédiaire, et ce en dépit :
- d'un chargement non-optimal du four lors de la deuxième étape, du fait de la diminution importante du volume de produit après carbonisation, et
- du sacrifice éventuel d'un ou plusieurs capteurs de température utilisé(s) lors de la première étape.

L'invention a aussi pour but de fournir une installation industrielle permettant la mise en oeuvre du procédé.

Ce but est atteint grâce à une installation du type comportant un four, des moyens de chauffage du four, au moins un capteur de mesure de température de chauffage du four, un circuit de commande relié au capteur de mesure de température et aux moyens de chauffage afin de commander la température de chauffage du four, au moins une entrée de gaz de balayage du volume interne du four, au moins une sortie d'effluent gazeux hors du four, et au moins un dispositif d'extraction de gaz relié à la sortie d'effluent gazeux, installation comprenant, conformément à l'invention :
- un premier dispositif d'extraction d'effluent gazeux destiné à recevoir un effluent gazeux produit lors de la transformation du matériau précurseur en carbone par chauffage dans le four,
- un deuxième dispositif d'extraction d'effluent gazeux destiné à recevoir un effluent gazeux produit par traitement thermique à haute température dans le four après transformation du matériau précurseur, et
- des moyens de commutation permettant de relier sélectivement le four au premier ou au deuxième dispositif d'extraction.

Selon une particularité de l'installation, celle-ci comprend :
- au moins un premier capteur de température logé dans le four et destiné à fournir une information représentative de la température de chauffage lors de la transformation du matériau précurseur en carbone, et
- au moins un deuxième capteur de température destiné à fournir une information représentative de la température de chauffage lors du traitement thermique à haute température après transformation du précurseur.

Le ou chaque premier capteur est de préférence un capteur à thermocouple logé dans une enveloppe, par exemple en forme de canne, disposée à proximité d'un four et réalisée en un matériau réfractaire, tel que du graphite. La canne assure une fonction de confinement qui permet d'éviter des perturbations de mesure de température et ultérieurement une pollution de l'atmosphère du four par les produits résultant de la destruction du ou des capteurs à thermocouple lors du traitement thermique à haute température. Le ou chaque deuxième capteur est de préférence un pyromètre à visée optique.

Selon une autre particularité de l'installation, le deuxième dispositif d'extraction comporte une canalisation d'évacuation d'effluent reliée à une sortie du four et des moyens pour injecter dans la canalisation d'évacuation, à proximité de la sortie du four, au moins un agent de neutralisation d'un ou plusieurs produit(s), notamment métal(aux), contenu(s) dans l'effluent.

Selon encore une autre particularité de l'installation, celle-ci comprend un premier et un deuxième circuit d'alimentation du four en gaz inerte de balayage et des moyens de commutation permettant de relier sélectivement le four au premier ou au deuxième circuit d'alimentation.

Avantageusement, il est aussi prévu un dispositif de mesure relié au volume interne du four et apte à fournir une mesure de la quantité d'oxygène contenu dans un gaz inerte de balayage du four, tel que de l'azote.

### Brève description des dessins

L'invention sera mieux comprise à la lecture de la description faite ci-après, à titre indicatif mais non limitatif en référence aux dessins annexés sur lesquels :
- la figure 1 est une vue générale très schématique d'une installation selon un mode de réalisation de l'invention ;
- la figure 2 est une autre vue de détail montrant une partie d'un dispositif d'extraction d'effluent gazeux hors du four de l'installation de la figure 1 ;
- la figure 3 est une vue de détail montrant des capteurs de température disposés dans le four de l'installation de la figure 1 ; et
- la figure 4 montre une courbe illustrant la variation dans le temps de la température de chauffage du four de l'installation de la figure 1.

### Description détaillée d'un mode de réalisation

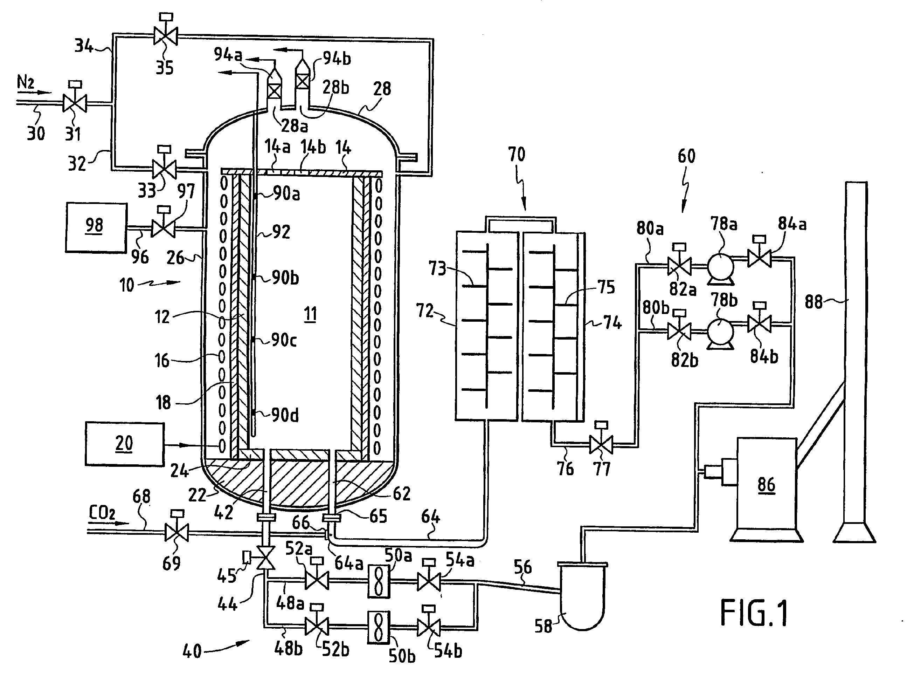

La figure 1 montre très schématiquement un four 10 comprenant un suscepteur 12 de forme cylindrique et d'axe vertical qui délimite latéralement un volume ou enceinte 11 pour le chargement de produits (non représentés) en un matériau précurseur de carbone, par exemple des textures fibreuses en PAN préoxydé. Le suscepteur est surmonté d'un couvercle 14.

Le suscepteur 12, par exemple en graphite, est chauffé par couplage inductif avec un inducteur 16 qui entoure le suscepteur avec interposition d'un isolant thermique 18. L'inducteur est alimenté par un circuit 20 qui délivre un courant en fonction du besoin de chauffage du four.

L'inducteur peut être divisé en plusieurs sections sur la hauteur du four. Chaque section est alimentée séparément en courant électrique afin de définir dans le four différentes zones de chauffage dans lesquelles la température peut être régulée indépendamment.

Le fond du four est formé d'un isolant thermique 22 recouvert d'une sole de four 24, par exemple en graphite, sur laquelle repose le suscepteur 12.

L'ensemble est logé dans une enveloppe 26 par exemple métallique fermée de façon étanche par un couvercle amovible 28.

Une conduite 30 munie d'une vanne 31 est reliée à une source (non représentée) de gaz neutre, par exemple de l'argon ou, dans cet exemple, de l'azote N₂. La conduite 30 est reliée à deux circuits 32 et 34 d'alimentation du four 10 en gaz neutre de balayage prévus respectivement pour une alimentation à faible débit et une alimentation à fort débit. Chaque circuit 32, 34 est formé par une conduite munie d'une vanne de régulation de débit, respectivement 33, 35. Les circuits 32, 34 débouchent à l'intérieur du four 10 à la partie supérieure de celui-ci. Le circuit 32, de même éventuellement que le circuit 34 peut être relié à plusieurs entrées débouchant en des endroits différents autour de l'enveloppe 26 du four.

Deux dispositifs d'extraction 40, 60 sont reliés à des canalisations de sorties respectives 42, 62 du four traversant le fond de celui-ci.

Le dispositif 40 est destiné à extraire l'effluent gazeux produit lors de la transformation du précurseur de carbone en carbone. Il est relié à la sortie 42 par une canalisation 44 munie d'une vanne 45.

Des conduites 48a, 48b sur lesquelles sont montés des ventilateurs 50a, 50b respectivement, sont branchées en parallèle entre la canalisation 44 et un pot 58 destiné à recueillir des nitriles, principalement des nitriles lourds contenus dans les effluents gazeux et condensés sous forme liquide. Des vannes 52a, 52b et 54a, 54b sont montées sur les conduites 48a, 48b en amont et en aval des ventilateurs 50a, 50b afin de pouvoir mettre en circuit ou isoler ceux-ci sélectivement. Bien qu'un seul ventilateur puisse être utilisé, la présence de deux ventilateurs, qui peuvent être mis en service sélectivement, est préférée par souci de redondance et/ou pour accroître si nécessaire le débit d'extraction. A titre de sécurité supplémentaire, une vanne automatique peut être montée en parallèle sur les ventilateurs pour s'ouvrir lorsque la pression dans la canalisation 44 devient supérieure à la pression atmosphérique et se refermer lorsque la pression dans la canalisation 44 redevient égale ou inférieure à la pression atmosphérique, afin d'éviter l'entrée d'air dans le four.

La conduite 56 qui relie les conduites 48a, 48b en commun au pot 58 peut être légèrement inclinée. Le pot 58 est muni d'un circuit de rinçage (non représenté) permettant un nettoyage du pot en circuit fermé.

Le dispositif 60 est destiné à extraire l'effluent gazeux produit lors d'un traitement thermique réalisé à température élevée après carbonisation des produits en précurseur de carbone. Un tel traitement vise notamment à éliminer des métaux et notamment du sodium résiduel contenus initialement dans le précurseur. Il comprend essentiellement un arbre vertical à plateaux à chicanes 70 et un dispositif d'aspiration 80.

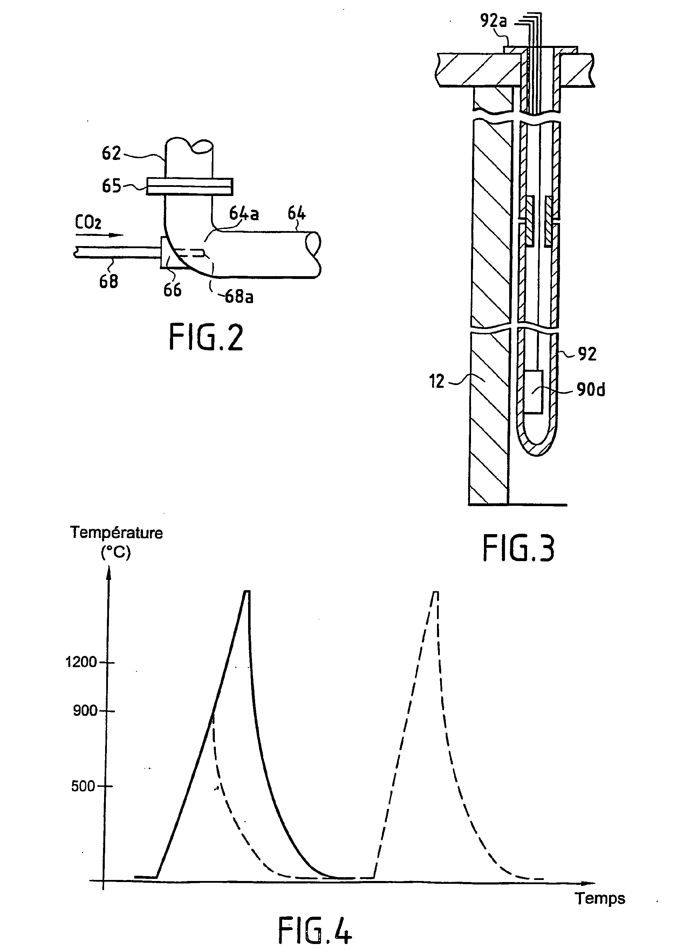

Le dispositif 60 est relié à la sortie 62 par une canalisation 64 munie d'une entrée 66 d'injection de dioxyde de carbone CO₂. Comme le montre en détail la figure 2, la canalisation 64 forme un coude 64a à son extrémité raccordée par une bride 65 à la conduite de sortie 62 du four traversant le fond de celui-ci. L'entrée d'injection 66 est raccordée à une conduite 68 qui est reliée à une source (non représentée) de gaz CO₂ et est munie notamment d'une vanne 69. La conduite 68 se prolonge par une buse 68a qui pénètre dans la canalisation 64 afin d'injecter le gaz CO₂ dans la canalisation vers l'extrémité aval du coude 64a et éviter une injection accidentelle de gaz CO₂ à l'intérieur du four par la conduite de sortie 62.

Le dispositif 70 est destiné à piéger des éléments solides contenus dans l'effluent gazeux acheminé par la canalisation 64. Il comprend deux colonnes 72, 74 munies de plateaux 73, 75 imposant un trajet tortueux aux gaz et reliées en série entre la canalisation 64 et une conduite 76 munie d'une vanne 77.

Le dispositif d'inspiration 80 comprend des pompes 78a, 78b montées sur des conduites respectives 80a, 80b insérées en parallèle entre la conduite 76 et un brûleur 86. Des vannes 82a, 82b et 84a, 84b sont montées sur les conduites 80a, 80b en amont et en aval des pompes 78a, 78b afin de pouvoir mettre en circuit ou isoler celles-ci sélectivement. Les pompes 78a, 78b permettent d'établir le niveau de pression réduite souhaitée dans le four. Bien qu'une seule pompe puisse être utilisée, la présence de deux pompes est préférée par souci de redondance.

Le brûleur 86, dont l'entrée est aussi reliée à la sortie du pot à nitriles 58, alimente une cheminée 88.

Le four 10 est équipé de capteurs de température reliés au circuit de commande 20 afin de régler la température de chauffage à la valeur voulue.

Une première série de capteurs, utilisés lors de la transformation du précurseur de carbone, est constituée de plusieurs capteurs à thermocouple, par exemple quatre capteurs 90a, 90b, 90c, 90d disposés à différents niveaux au voisinage de la face interne du suscepteur 12. L'utilisation de plusieurs capteurs n'est pas une nécessité, mais est préférée pour pouvoir définir plusieurs zones de chauffage dans le four. La température dans chaque zone est alors régulée indépendamment en commandant le courant dans la section d'inducteur correspondante à partir de l'information de température fournie par le capteur associé à cette zone de chauffage, l'inducteur étant alors partagé en quatre sections. Un ou plusieurs capteurs à thermocouple additionnels peuvent être prévus à titre de redondance. On notera que les capteurs 90a, 90b, 90c, 90d fournissent une information représentative de la température de chauffage, c'est-à-dire la température de la paroi du suscepteur 12, et non de la température des produits en cours de carbonisation.

Les capteurs 90a, 90b, 90c, 90d sont logés à l'intérieur d'une canne creuse 92 (figures 1 et 3) dont le volume interne est isolé de celui du four. La canne 92 peut être formée de plusieurs segments ou modules assemblés bout à bout par vissage et être suspendue au couvercle 14 du suscepteur. Les conducteurs reliant les capteurs 90a, 90b, 90c et 90d avec l'extérieur et le circuit 20 s'étendent le long du volume interne de la canne 92.

La canne 92 réalise un confinement des capteurs de température. De la sorte, la mesure de température n'est pas perturbée, notamment par l'existence de forts courants gazeux dans le four. En outre, comme indiqué plus loin, cela permet de recueillir les produits de destruction des capteurs lorsque la température est augmentée ultérieurement au-delà de la limite qu'ils peuvent supporter. La canne doit être constituée en un matériau réfractaire peu poreux, résistant aux gaz de décomposition des produits en précurseur de carbone et aux produits de fusion des thermocouples, et assez facile à usiner. On utilisera par exemple un graphite à grains fins avec une épaisseur de paroi par exemple de l'ordre de 10 à 15 mm. La réalisation de la canne en modules facilite son montage et son démontage ainsi que le remplacement de parties défectueuses. A son extrémité supérieure, la canne 92 traverse le couvercle 14 et repose sur celui-ci par un épaulement 92a, ce qui autorise un positionnement aisé et précis de la canne.

D'autres capteurs, par exemple deux capteurs 94a 94b constitués par des pyromètres à visée optique, sont logés sur le couvercle 28 au regard de fenêtres 28a, 28b pratiquées dans celui-ci et d'ouvertures 14a, 14b pratiquées dans le couvercle 14 du suscepteur. L'utilisation de plusieurs capteurs pyrométriques n'est pas une nécessité, mais permet d'effectuer des mesures à différents niveaux et d'éliminer par comparaison d'éventuelles mesures aberrantes. On utilise de préférence des pyromètres de type bichromatique produisant un signal continu constamment exploitable.

On notera enfin qu'une sortie supplémentaire 96 munie d'une vanne 97 est prévue latéralement dans la paroi du four, pour alimenter un analyseur d'oxygène 98. En variante, l'analyseur pourrait être branché sur une autre conduite de sortie du four, par exemple sur la canalisation 44.

L'installation décrite ci-avant permet d'enchaîner, sans refroidissement intermédiaire :
- une première étape de transformation de textures fibreuses en PAN préoxydé en préformes en fibres de carbone, la transformation du PAN préoxydé étant réalisée sous balayage de N₂, à une pression voisine de la pression atmosphérique, et en suivant un profil d'élévation de température de chauffage prédéterminé jusqu'à une température comprise entre 750°C et 1100°C, typiquement environ 900°C, et
- une deuxième étape réalisée sous balayage de N₂ sous pression réduite, comprise entre 0,5 kPa et 10 kPa, typiquement environ 1 à 5 kPa, et en suivant un profil d'élévation de température prédéterminé jusqu'à une température supérieure à 1000°C, qui est comprise entre 1400°C et 1650°C, typiquement environ 1600°C, pour l'élimination du sodium contenu dans les préformes en fibres de carbone, et qui peut atteindre 2000°C ou 2200°C, voire 2500°C pour assurer aussi l'élimination d'autres impuretés métalliques par sublimation et/ou pour modifier des propriétés des fibres de carbone constitutives des préformes.

La température maximale lors de la première étape est choisie suffisante pour assurer la carbonisation complète ou quasi complète de PAN préoxydé. Elle est inférieure aux seuils à partir desquels des métaux ou impuretés métalliques, notamment Na, sont sublimés à la pression sous laquelle la première étape est conduite et inférieure au seuil à partir duquel les capteurs de température à thermocouple risquent d'être détruits. La température maximale lors de la deuxième étape est choisie suffisante pour assurer sous pression réduite la sublimation des métaux ou impuretés métalliques à éliminer, en l'espèce Na. Dans certains cas, un seuil au-delà duquel les propriétés mécaniques des fibres carbone risquent d'être affectées ne doit de préférence pas être dépassé. Dans le cas de fibres carbone issues de précurseur PAN préoxydé, un tel seuil se situe à environ 1650°C ou un peu plus. Dans d'autres cas, au contraire, ce seuil est dépassé afin précisément de modifier des propriétés des fibres de carbone.

Du fait de la réalisation de la deuxième étape sous pression réduite, il est souhaitable de tester la bonne étanchéité du four chargé et fermé. Cela ne peut être réalisé par des moyens classiques à la fin de la première étape alors qu'il règne une température élevée dans le four.

L'étanchéité est par conséquent testée au début du processus, avant la montée en température de la première étape. Toutefois, le PAN préoxydé étant hydrophile, la présence de quantité importante d'eau au sein des préformes rend impossible un test d'étanchéité classique par mesure de taux de fuite, du fait du dégagement continuel de vapeur d'eau.

On procède alors avantageusement comme suit.

L'étanchéité du four vide et nettoyé est testée par mesure de la remontée de la pression interne après fermeture du four et mise sous vide par pompage par la sortie 62. L'étanchéité est considérée comme bonne si la vitesse de remontée en pression, exprimant le taux de fuite du four vide, est inférieure à un seuil donné, par exemple 0,1 kPa/h.

Le four est ensuite ouvert pour le chargement des préformes. Après fermeture, la pression est abaissée par pompage par la sortie 62 à quelques kPa et un serrage approprié des organes de fermeture du couvercle 28 est réalisé.

De l'azote est alors injecté dans le four par la conduite 32 ou 34 pour remonter la pression à une valeur proche de la pression atmosphérique externe mais inférieure à celle-ci, et un balayage du four sous azote est réalisé avec extraction par la sortie 42, la sortie 62 étant inopérante.

Le taux d'oxygène gazeux O₂ contenu dans l'azote balayant le four est mesuré au moyen de l'analyseur 98. On peut utiliser comme analyseur l'appareil proposé sous la référence " Xentra 4100" par la société britannique Servomex.

L'étanchéité est réputée bonne lorsque le taux d'oxygène O₂ devient inférieur à un seuil donné, par exemple quelques dizaines de ppm, après une période de temps prédéterminée, par exemple inférieure à 1 h. La vanne 97 est alors fermée et la carbonisation des préformes peut démarrer.

De l'azote est injecté dans le four par la conduite 34, les vannes 31 et 35 étant ouvertes et la vanne 33 fermée. La sortie 42 est rendue opérationnelle par ouverture de la vanne 45, et mise en service d'au moins l'un des ventilateurs 50a, 50b avec ouverture des vannes qui l'encadrent. La sortie 62 est inopérante.

Le chauffage du four est démarré par alimentation de l'inducteur. La température mesurée au niveau de la paroi interne du suscepteur par les capteurs 90a, 90b, 90c, 90d est transmise au circuit de commande 20 afin d'alimenter l'inducteur pour faire évoluer cette température suivant un profil de montée en température préétabli.

Un tel profil est montré sur la figure 4. De façon connue, il comprend, jusqu'à ce que la température d'environ 900°C soit atteinte, une montée progressive de la température avec des paliers (non représentés) visant à contrôler la transformation chimique du précurseur à des niveaux de température où cette transformation devient exothermique et risquerait sinon de s'emballer.

La réaction chimique de transformation du précurseur engendre un volume important d'effluents gazeux. Ceux-ci rendent une mesure de la température de chauffage du four par visée pyrométrique très difficile, voire pratiquement impossible, d'où le recours à des capteurs logés dans le four.

Le balayage de l'intérieur de l'enveloppe 26 par N₂ permet d'éviter la formation de dépôts parasites sur l'inducteur logé dans l'enveloppe, dépôts susceptibles d'entraîner un endommagement de l'inducteur. Le balayage est donc de préférence relativement important et réalisé pour parcourir tout le four.

Les capteurs étant isolés des courants d'effluent gazeux par leur confinement dans la canne 92, la mesure de température est fiable. Le partage du four en différentes zones de chauffage dans lesquelles la température peut être réglée indépendamment permet en outre de faire régner la température voulue à tous les niveaux du four.

L'effluent gazeux extrait par la sortie 42 et contenant des nitriles, en particulier des cyanures, est au moins partiellement condensé par passage dans le pot 56 avant d'être amené au brûleur 86, les gaz de combustion et le résidu d'effluent gazeux étant ensuite évacués par la cheminée 88.

En fin de première étape du procédé, la transformation du précurseur en carbone est terminée, la teneur des textures fibreuses en carbone étant supérieure à 95 % et pouvant atteindre environ 99 % ou plus.

La transition entre la première et la deuxième étape comprend l'ouverture des vannes 33 et 77, l'arrêt du ventilateur ou des ventilateurs 50a, 50b et la fermeture des vannes associées, la fermeture des vannes 35 et 45, et la mise en service d'au moins une des pompes 78a, 78b avec ouverture des vannes qui l'encadrent, la sortie 42 étant inopérante.

La pression réduite voulue dans le four est établie avec balayage de N₂ à faible débit, la mesure de température est commutée des capteurs 90a, 90b, 90c, 90d vers les capteurs 94a, 94b et le chauffage du four est poursuivi au-delà de la température atteinte en fin de première étape. On notera que le passage de la première à la deuxième étape peut aussi s'accompagner d'un changement de configuration des zones de chauffage dans le four. Les capteurs 94a, 94b peuvent être agencés pour fournir des informations de température à deux niveaux différents du four, permettant de définir deux zones de chauffage chacune associée par exemple à deux sections de l'inducteur.

On notera que l'ensemble des opérations de transition entre la première et la deuxième étape peut être automatisé.

La température mesurée par les capteurs 94a, 94b -est transmise au circuit de commande 20 afin d'alimenter l'inducteur pour faire évoluer cette température suivant un profil de montée en température pré-établi.

Un tel profil est montré également sur la figure 4. II comprend, jusqu'à ce que la température voulue soit atteinte (par exemple ici environ 1600°C), une montée progressive de la température avec paliers éventuels. La faible quantité d'effluents gazeux produits ne perturbe pas la mesure de température par visée pyrométrique.

A partir d'une température d'environ 1200°C, le sodium contenu dans les textures fibreuses est libéré et est évacué avec les effluents gazeux. Du CO₂ est injecté dans la canalisation 64 par ouverture de la vanne 69 afin de réaliser une passivation de Na dès sa sortie du four. Cela permet d'éviter un dépôt de Na potentiellement dangereux sur les parois de la canalisation 64. L'injection de CO₂ permet de réaliser aussi la passivation de composés du sodium qui peuvent être contenus dans l'effluent gazeux sous forme sublimée et qui pourraient eux aussi former un dépôt potentiellement dangereux, notamment l'oxyde de sodium NaO₂.

On notera qu'à titre de sécurité, l'injection de CO₂ peut être démarrée dès le début de la deuxième étape. Cette injection est également de préférence poursuivie au moins jusqu'à la fin du processus. Le carbonate de sodium produit est recueilli dans le dispositif 70 d'où il peut être éliminé aisément à un stade ultérieur par lavage à l'eau in situ ou par démontage du dispositif à plateaux 70 et rinçage à l'eau dans une virole de lavage (non représentée). L'effluent gazeux épuré de sodium est amené au brûleur 86.

Les capteurs 90a, 90b, 90c, 90d à thermocouple ne pouvant supporter les températures élevées atteintes, ils sont détruits par la chaleur. Les produits de distinction restant confinés dans la canne 92, ne polluent pas l'atmosphère interne du four. La canne 92 peut ultérieurement être récupérée par un nouvel usage. Lorsque la deuxième étape est terminée, le chauffage est interrompu et on laisse les textures fibreuses refroidir sous atmosphère statique de N₂. L'injection de CO₂ peut être poursuivie pendant le début de la phase de refroidissement.

On notera que la neutralisation du sodium (ou de composé du sodium tel NaO₂) contenu dans l'effluent gazeux peut être réalisée par injection de vapeur d'eau dans la canalisation 64, au lieu de CO₂. L'injection simultanée de CO₂ et de vapeur d'eau à travers une même buse d'injection ou à travers deux buses différentes peut aussi être envisagée.

On notera aussi que la passivation du sodium par CO₂ se traduit par une diminution importante de la teneur en ions cyanure (CN⁻) dans le dépôt recueilli dans les colonnes 72, 74 par rapport à ce qui est observé en l'absence de passivation, ce qui ajoute à la sécurité apportée par l'absence de dépôt de sodium.

La courbe en trait interrompu de la figure 4 montre le profil de température qui aurait dû être suivi avec un procédé de l'art antérieur, c'est-à-dire avec refroidissement des textures fibreuses en fin de première étape et chargement de celles-ci dans un autre four pour réaliser la deuxième étape du traitement. Le gain en temps apporté par le procédé selon l'invention est considérable, chaque étape se déroulant sur plusieurs jours, voire jusqu'à une dizaine de jours, à l'échelle industrielle.

Le procédé et l'installation qui viennent d'être décrits conviennent particulièrement pour la réalisation de produits en carbone à partir de précurseur PAN préoxydé, notamment pour la réalisation de préformes fibreuses en carbone destinées à la fabrication de pièces en matériau composite thermostructural.

Les préformes sont obtenues par carbonisation de textures réalisées en fibres à l'état précurseur de carbone plus aptes à subir des opération textiles que les fibres de carbone. Ces textures peuvent être unidimensionnelles tels que fils ou câbles, ou bidimensionnelles, tels que tissu ou nappes formées de fils ou câbles parallèles, ou encore tridimensionnelles, telles que des préformes obtenues par bobinage filamentaire, ou par empilement, enroulement ou drapage de tissus ou nappes en strates superposées et éventuellement liées entre elles par aiguilletage ou couture, par exemple.

L'invention n'est toutefois pas limitée à cette application. Elle s'applique à des produits en matériau précurseur de carbone autres que le PAN préoxydé, notamment des produits contenant un ou plusieurs métaux ou impuretés métalliques à éliminer. Des exemples de tels précurseurs sont des brais ou des matériaux phénoliques ou des rayonnes.

Outre le sodium, le calcium et/ou le magnésium peuvent être éliminés par sublimation.

Dans le cas, notamment de produits en carbone devant présenter un degré de pureté élevé, des métaux tels que Fe, Ni et Cr peuvent aussi devoir être éliminés. Il est alors nécessaire de conduire la deuxième étape du processus jusqu'à une température suffisante pour assurer la sublimation de ces métaux, par exemple une température atteignant 2000°C à 2200°C, voire 2500°C.

## Revendications

1. Procédé industriel pour l'obtention de produit en carbone à partir de produit en un matériau précurseur de carbone, comportant :
- une première étape de transformation du matériau précurseur en carbone par chauffage, avec extraction continue d'effluent gazeux produit, et
- une deuxième étape de traitement thermique à haute température sous pression réduite avec extraction continue d'effluent gazeux produit,
**caractérisé en ce que** :
la première et la deuxième étape sont réalisées de façon enchaînée dans un même four en procédant, après la fin de la première étape, à :
- une commutation de la sortie d'effluent gazeux du four pour interrompre une liaison avec un premier dispositif d'extraction utilisé lors de la première étape et établir une liaison avec un deuxième dispositif d'extraction utilisé lors de la deuxième étape,
- un ajustement de la pression interne du four à la valeur de pression réduite requise pour la deuxième étape, et
- un ajustement de la température de chauffage du four à partir de la valeur atteinte à la fin de la première étape.

2. Procédé selon la revendication 1, comprenant la mesure de la température de chauffage au moyen de capteurs pendant la première et la deuxième étape, **caractérisé en ce que**, après la fin de la première étape, on réalise une commutation de la mesure de température d'au moins un premier capteur à au moins un deuxième capteur différent du premier.

3. Procédé selon la revendication 2, **caractérisé en ce que** le ou chaque premier capteur est un capteur de type à thermocouple qui est logé dans le four à proximité d'une paroi de celui-ci et qui est sacrifié lors de la deuxième étape.

4. Procédé selon la revendication 3, **caractérisé en ce que** le ou chaque premier capteur est disposé dans un espace confiné pour éviter une pollution de l'atmosphère interne du four lors de sa destruction.

5. Procédé selon l'une quelconque des revendications 1 à 4, **caractérisé en ce que** les transitions entre la première et la deuxième étape sont automatisées.

6. Procédé selon l'une quelconque des revendications 1 à 5, **caractérisé en ce que** l'on réalise un test d'étanchéité du four avant la première étape.

7. Procédé selon la revendication 6, **caractérisé en ce que** le test d'étanchéité comprend le balayage du volume interne du four par gaz neutre et la mesure de la quantité d'oxygène gazeux contenu dans le gaz en sortie du four, après chargement du four.

8. Procédé selon l'une quelconque des revendications 1 à 7, **caractérisé en ce que**, au cours de la deuxième étape, on réalise une neutralisation de métal alcalin contenu dans l'effluent gazeux extrait du four.

9. Procédé selon la revendication 8, **caractérisé en ce que** la neutralisation est réalisée au moins en partie par passivation par injection de dioxyde de carbone dans l'effluent gazeux extrait du four.

10. Procédé selon l'une quelconque des revendications 8 et 9, **caractérisé en ce que** la neutralisation est réalisée au moins en partie par hydratation par injection de vapeur d'eau.

11. Procédé selon l'une quelconque des revendications 1 à 10, pour l'obtention de produits en fibres de carbone à partir de produits en fibres de polyacrylonitrile préoxydé.

12. Installation industrielle pour l'obtention de produits en carbone à partir de produits en un matériau précurseur de carbone comportant un four (10), des moyens (12, 14) de chauffage du four, au moins un capteur de mesure de température de chauffage du four, un circuit de commande (20) relié au capteur de mesure de température et aux moyens de chauffage afin de commander la température de chauffage du four, au moins une entrée de gaz de balayage du volume interne du four, au moins une sortie d'effluent gazeux hors du four, et au moins un dispositif d'extraction relié à la sortie d'effluent gazeux,
**caractérisée en ce qu'**elle comprend :
- un premier dispositif (40) d'extraction d'effluent gazeux destiné à recevoir un effluent gazeux produit lors de la transformation du matériau précurseur en carbone par chauffage dans le four,
- un deuxième dispositif (60) d'extraction d'effluent gazeux destiné à recevoir un effluent gazeux et produit par traitement thermique, à haute température dans le four après transformation du matériau précurseur, et
- des moyens de commutation (45, 77) permettant de relier sélectivement le four au premier ou au deuxième dispositif d'extraction.

13. Installation selon la revendication 12, **caractérisée en ce qu'**elle comprend :
- au moins un premier capteur de température (90a, 90b, 90c, 90d) logé dans le four (10) et destiné à fournir une information représentative de la température de chauffage lors de la transformation du matériau précurseur en carbone, et
- au moins un deuxième capteur de température (94a, 94b) destiné à fournir une information représentative de la température de chauffage lors du traitement thermique à haute température après transformation du précurseur.

14. Installation selon la revendication 13, **caractérisée en ce que** le ou chaque premier capteur (90a, 90b, 90c, 90d) est un capteur à thermocouple logé dans une enveloppe fermée (92) en matériau réfractaire.

15. Installation selon la revendication 14, **caractérisée en ce que** l'enveloppe fermée est sous forme d'une canne (92) disposée à proximité d'une paroi du four.

16. Installation selon l'une quelconque des revendications 14 et 15, **caractérisée en ce que** l'enveloppe (92) est en graphite.

17. Installation selon l'une quelconque des revendications 13 à 16, **caractérisée en ce que** le ou chaque deuxième capteur (94a, 94b) est un pyromètre à visée optique.

18. Installation selon l'une quelconque des revendications 12 à 17, **caractérisée en ce que** le deuxième dispositif d'extraction comporte une canalisation d'évacuation d'effluent (64) reliée à une sortie du four et des moyens pour injecter dans la canalisation d'évacuation, à proximité de la sortie du four, au moins un agent de neutralisation de métal contenu dans l'effluent.

19. Installation selon la revendication 18, **caractérisée en ce que** les moyens d'injection d'agent de neutralisation comporte une buse (68a) pénétrant dans un coude (64a) de la canalisation d'évacuation (64).

20. Installation selon l'une quelconque des revendications 12 à 19, **caractérisée en ce qu'**elle comprend un premier (32) et un deuxième (34) circuit d'alimentation du four en gaz inerte de balayage et des moyens de commutation (33, 35) permettant de relier sélectivement le four au premier ou au deuxième circuit d'alimentation.

21. Installation selon l'une quelconque des revendications 12 à 20, **caractérisée en ce qu'**elle comprend un dispositif de mesure (98) relié au volume interne du four (10) et apte à fournir une mesure de la quantité d'oxygène contenu dans un gaz issu du four.

## Claims

1. An industrial method for obtaining a carbon body from a body made of a carbon-precursor material, the method comprising:
- a first stage in which the carbon precursor material is transformed into carbon by heating, with the resulting gaseous effluent being extracted continuously; and
- a second stage of high temperature heat treatment under low pressure with the resulting gaseous effluent being continuously extracted,
the method being **characterised in that**:
the first and second stages are performed one after another in the same oven by proceeding, after the end of the first stage, with the following steps:
- switching the gaseous effluent outlet from the oven to interrupt a connection with a first extractor device used during the first stage and to establish a connection with a second extractor device used during the second stage;
- adjusting the pressure inside the oven to the low pressure value required for the second stage; and
- adjusting the heating temperature of the oven starting from the temperature reached at the end of the first stage.

2. A method according to claim 1, comprising measuring the heating temperature by means of sensors during the first and second stages, **characterised in that** after the end of the first stage, temperature measurement is switched from at least one first sensor to at least one second sensor separate from the first.

3. A method according to claim 2, **characterised in that** the or each first sensor is a thermocouple type sensor housed in the oven close to a wall thereof and sacrificed during the second stage.

4. A method according to claim 3, **characterised in that** the or each first sensor is disposed in a confined space in order to avoid polluting the atmosphere inside the oven on being destroyed.

5. A method according to any one of claims 1 to 4, **characterised in that** the transitions between the first and second stages are automated.

6. A method according to any one of claims 1 to 5, **characterised in that** the oven is leak-tested prior to the first stage.

7. A method according to claim 6, **characterised in that** the leak-test comprises sweeping the inside volume of the oven with an inert gas and measuring the quantity of gaseous oxygen contained in the gas outlet from the oven after the oven has been loaded.

8. A method according to any one of claims 1 to 7, **characterised in that** during the second stage, alkali metal contained in the gaseous effluent extracted from the oven is neutralized.

9. A method according to claim 8, **characterised in that** neutralization is performed at least in part by passivation by injecting carbon dioxide into the gaseous effluent extracted from the oven.

10. A method according to claim 8 or claim 9, **characterised in that** neutralization is performed at least in part by hydration by injecting steam.

11. A method according to any one of claims 1 to 10, for obtaining carbon fibre bodies from bodies made of preoxidized polyacrylonitrile fibres.

12. An industrial installation for obtaining carbon bodies from bodies made of a carbon-precursor material, the installation comprising an oven (10), means (12, 14) for heating the oven, at least one sensor for measuring the heating temperature of the oven, a control circuit (20) connected to the temperature-measuring sensor and to the heater means in order to control the heating temperature of the oven, at least one inlet for sweeping gas to sweep the inside volume of the oven, at least one outlet for extracting gaseous effluent from the oven, and at least one extractor device connected to the gaseous effluent outlet,
the installation being **characterised in that** it comprises:
- a first gaseous effluent extractor device (40) for receiving a gaseous effluent produced during the transformation of the precursor material into carbon by heating within the oven;
- a second gaseous effluent extractor device (60) for receiving a gaseous effluent produced by heat treatment at high temperature in the oven after the precursor material has been transformed; and
- switch means (45, 77) enabling the oven to be connected selectively to the first or the second extractor device.

13. An installation according to claim 12, **characterised in that** it comprises:
- at least one first temperature sensor (90a, 90b, 90c, 90d) housed in the oven (10) to deliver information representative of the heating temperature while the precursor material is being transformed into carbon; and
- at least one second temperature sensor (94a, 94b) for supplying information representative of the heating temperature during the high temperature heat treatment after the precursor has been transformed.

14. An installation according to claim 13, **characterised in that** the or each first sensor (90a, 90b, 90c, 90d) is a thermocouple sensor housed in a closed casing (92) of refractory material.

15. An installation according to claim 14, **characterised in that** the closed casing is in the form of a stick (92) placed in the vicinity of a wall of the oven.

16. An installation according to claim 14 or claim 15, **characterised in that** the casing (92) is made of graphite.

17. An installation according to any one of claims 13 to 16, **characterised in that** the or each second sensor (94a, 94b) is an optically-aimed pyrometer.

18. An installation according to any one of claims 12 to 17, **characterised in that** the second extractor device has an effluent exhaust pipe (64) connected to an outlet from the oven and means for injecting at least one neutralizing agent into the exhaust pipe close to the outlet from the oven in order to neutralize metal contained in the effluent.

19. An installation according to claim 18, **characterised in that** the means for injecting neutralizing agent comprise a nozzle (68a) penetrating into a bend (64a) of the exhaust pipe (64).

20. An installation according to any one of claims 12 to 19, **characterised in that** it comprises first and second feed circuits (32, 34) for feeding the oven with inert sweeping gas, and switch means (33, 35) enabling the oven to be connected selectively to the first or to the second feed circuit.

21. An installation according to any one of claims 12 to 20, **characterised in that** it includes a measuring device (98) connected to the inside volume of the oven (10) and suitable for supplying a measurement of the quantity of oxygen contained in the gas coming from the oven.

## Patentansprüche

1. Industrielles Verfahren zur Herstellung von Kohlenstoffprodukten aus Produkten aus einem Kohlenstoffvorläufermaterial, umfassend:
- einen ersten Schritt zur Umwandlung des Vorläufermaterials in Kohlenstoff durch Erhitzen, mit kontinuierlichem Abziehen der erzeugten Abgase, und
- einen zweiten Schritt zur Wärmebehandlung bei hoher Temperatur unter vermindertem Druck, mit kontinuierlichem Abziehen der erzeugten Abgase,
**dadurch gekennzeichnet, daß**:
der erste und der zweite Schritt miteinander verknüpft in einem gleichen Ofen durchgeführt werden, indem nach dem Ende des ersten Schrittes folgendes vollzogen wird:
- ein Umschalten des Abgasausgangs des Ofens, um eine Verbindung mit einer während des ersten Schritts verwendeten ersten Abzugsvorrichtung zu unterbrechen und um eine Verbindung mit einer während des zweiten Schritts verwendeten zweiten Abzugsvorrichtung herzustellen,
- ein Anpassen des Innendrucks des Ofens an den für den zweiten Schritt erforderlichen Wert verminderten Drucks, und
- ein Einstellen der Heiztemperatur des Ofens anhand des am Ende des ersten Schritts erreichten Wertes.

2. Verfahren nach Anspruch 1, umfassend das Messen der Heiztemperatur mittels Fühlern während des ersten und des zweiten Schritts, **dadurch gekennzeichnet, daß** nach dem Ende des ersten Schritts ein Umschalten der Temperaturmessung von wenigstens einem ersten Fühler auf wenigstens einen sich von dem ersten Fühler unterscheidenden zweiten Fühler erfolgt.

3. Verfahren nach Anspruch 2, **dadurch gekennzeichnet, daß** der oder jeder erste Fühler ein Fühler vom Typ mit Thermoelement ist, der in dem Ofen in der Nähe einer Wand dessen angeordnet ist und während des zweiten Schritts geopfert wird.

4. Verfahren nach Anspruch 3, **dadurch gekennzeichnet, daß** der oder jeder erste Fühler in einem begrenzten Raum angeordnet ist, um bei seiner Zerstörung ein Verschmutzen der Atmosphäre innerhalb des Ofens zu vermeiden.

5. Verfahren nach irgendeinem der Ansprüche 1 bis 4, **dadurch gekennzeichnet, daß** die Übergänge zwischen dem ersten und dem zweiten Schritt automatisiert sind.

6. Verfahren nach irgendeinem der Ansprüche 1 bis 5, **dadurch gekennzeichnet, daß** vor dem ersten Schritt ein Dichtigkeitstests des Ofens durchgeführt wird.

7. Verfahren nach Anspruch 6, **dadurch gekennzeichnet, daß** der Dichtigkeitstest das Spülen des Innenvolumens des Ofens mit Neutralgas sowie das Messen der Menge des in dem Gas bei Austritt aus dem Ofen enthaltenen gasförmigen Sauerstoffs, nach dem Beschicken des Ofens umfaßt.

8. Verfahren nach irgendeinem der Ansprüche 1 bis 7, **dadurch gekennzeichnet, daß** im Laufe des zweiten Schritts eine Neutralisierung von in den aus dem Ofen abgezogenen Abgasen enthaltenem Alkalimetall vollzogen wird.

9. Verfahren nach Anspruch 8, **dadurch gekennzeichnet, daß** die Neutralisierung wenigstens teilweise mittels Passivierung durch Einspritzen von Kohlendioxid in die aus dem Ofen abgezogenen Abgase erfolgt.

10. Verfahren nach irgendeinem der Ansprüche 8 und 9, **dadurch gekennzeichnet, daß** die Neutralisierung wenigstens teilweise mittels Hydratation durch Einspritzen von Wasserdampf vollzogen wird.

11. Verfahren nach irgendeinem der Ansprüche 1 bis 10, zur Herstellung von Kohlenstoffaserprodukten aus Produkten aus Fasern aus voroxidiertem Polyacrylnitril.

12. Industrielle Anlage für die Herstellung von Kohlenstoffprodukten aus Produkten aus einem Kohlenstoffvorläufermaterial, umfassend einen Ofen (10), Mittel (12, 14), zum Heizen des Ofens, wenigstens einen Fühler zur Messung der Heiztemperatur des Ofens, einen Steuerkreis (20), der mit dem Temperaturmeßfühler und den Heizmitteln verbunden ist, um die Heiztemperatur des Ofens zu steuern, wenigstens einen Gaseinlaß zum Spülen des Innenvolumens des Ofens, wenigstens einen Auslaß für die Abgase aus dem Ofen, sowie wenigstens eine Abzugsvorrichtung, die mit dem Auslaß für die Abgase verbunden ist,
**dadurch gekennzeichnet, daß** sie folgendes umfaßt:
- eine erste Vorrichtung (40) zum Abziehen der Abgase, die dazu bestimmt ist, Abgase aufzunehmen, die während der Umwandlung des Vorläufermaterials in Kohlenstoff durch Erhitzen in dem Ofen erzeugt werden,
- eine zweite Vorrichtung (60) zum Abziehen von Abgasen, welche dazu bestimmt ist, Abgase aufzunehmen, die durch Wärmebehandlung bei hoher Temperatur in dem Ofen nach der Umwandlung des Vorläufermaterials erzeugt werden, und
- Umschaltmittel (45, 77), die ermöglichen, den Ofen selektiv mit der ersten oder der zweiten Abzugsvorrichtung zu verbinden.

13. Anlage nach Anspruch 12, **dadurch gekennzeichnet, daß** sie folgendes umfaßt:
- wenigstens einen ersten Temperaturfühler (90a, 90b, 90c, 90d), der in dem Ofen (10) angeordnet und dazu bestimmt ist, eine Information zu liefern, die für die Heiztemperatur während der Umwandlung des Vorläufermaterials in Kohlenstoff repräsentativ ist, und
- wenigstens einen zweiten Temperaturfühler (94a, 94b), welcher dazu bestimmt ist, eine Information zu liefern, die für die Heiztemperatur während der Wärmebehandlung bei hoher Temperatur nach der Umwandlung des Vorläufers repräsentativ ist.

14. Anlage nach Anspruch 13, **dadurch gekennzeichnet, daß** der oder jeder erste Fühler (90a, 90b, 90c, 90d) ein Fühler mit Thermoelement ist, der in einer geschlossenen Hülle (92) aus feuerfestem Material untergebracht ist.

15. Anlage nach Anspruch 14, **dadurch gekennzeichnet, daß** die geschlossene Hülle in Form eines in der Nähe einer Wand des Ofens angeordneten Rohrs (92) vorliegt.

16. Anlage nach irgendeinem der Ansprüche 14 und 15, **dadurch gekennzeichnet, daß** die Hülle (92) aus Graphit besteht.

17. Anlage nach irgendeinem der Ansprüche 13 bis 16, **dadurch gekennzeichnet, daß** der oder jeder zweite Fühler (94a, 94b) ein optisches Pyrometer ist.

18. Anlage nach irgendeinem der Ansprüche 12 bis 17, **dadurch gekennzeichnet, daß** die zweite Abzugsvorrichtung eine Abgasabführrohrleitung (64), die mit einem Ausgang des Ofens verbunden ist, sowie Mittel umfaßt, um in die Abführrohrleitung, in der Nähe des Ausgangs des Ofens, wenigstens ein Mittel zur Neutralisierung des in den Abgasen enthaltenen Metalls einzuspritzen.

19. Anlage nach Anspruch 18, **dadurch gekennzeichnet, daß** die Mittel zum Einspritzen des Neutralisierungsmittels eine Düse (68a) umfassen, die in einen Krümmer (64a) der Abführrohrleitung (64) eindringt.

20. Anlage nach irgendeinem der Ansprüche 12 bis 19, **dadurch gekennzeichnet, daß** sie einen ersten (32) und einen zweiten (34) Kreis zur Versorgung des Ofens mit Inertspülgas sowie Umschaltmittel (33, 35) umfaßt, die ermöglichen, den Ofen selektiv mit dem ersten oder dem zweiten Versorgungskreis zu verbinden.

21. Anlage nach irgendeinem der Ansprüche 12 bis 20, **dadurch gekennzeichnet, daß** sie eine Meßvorrichtung (98) umfaßt, die mit dem Innenvolumen des Ofens (10) verbunden und geeignet ist, ein Maß der Menge des in einem aus dem Ofen austretenden Gas enthaltenen Sauerstoffs zu liefern.
